# EUROPEAN PATENT SPECIFICATION

(11) **EP 2 139 231 B1**
(45) Date of publication and mention of the grant of the patent: **28.03.2012**
(21) Application number: 09156655.4
(22) Date of filing: 30.03.2009
(51) Int. Cl.: H04N 5/445, H04N 5/50

(54) **Mobile terminal and method of managing channel list therein**
Mobiles Endgerät und Verfahren zum Verwalten einer Kanalliste darin
Terminal mobile et procédé de gestion de liste de canaux correspondante

(30) Priority: 23.06.2008 KR 20080059224
(43) Date of publication of application: 30.12.2009
(73) Proprietor: LG Electronics Inc., Seoul 150-721 (KR)
(72) Inventor: Kim, Mi Sun, SEOUL 153-801 (KR); Yang, Sung Chul, SEOUL 153-801 (KR); Kwon, Tae Jung, SEOUL 153-801 (KR); Park, Chang Young, SEOUL 153-801 (KR); Kim, So Yeon, SEOUL 153-801 (KR)
(74) Representative: Cabinet Plasseraud

(56) References cited:
- EP-A- 1 753 229
- EP-A- 1 791 264
- EP-A- 1 802 107
- EP-A- 2 066 117
- US-A1- 2006 184 983
- "Digital Video Broadcasting (DVB); IP Datacast over DVB-H: Implementation Guidelines for Mobility European Broadcasting Union Union Européenne de Radio-Télévision EBUÜER; ETSI TS 102 611" ETSI STANDARDS, LIS, SOPHIA ANTIPOLIS CEDEX, FRANCE, vol. BC, no. V1.1.1, 1 October 2007 (2007-10-01), XP014039831 ISSN: 0000-0001
- INTERNET CITATION: 'Mobile Terminal Supporting terrestrial Digital TV Broadcasting' NTT DOCOMO TECHNICAL JOURNAL, [Online] vol. 8, no. 1, 30 June 2006, pages 47 - 56 NTT DOCOMO Retrieved from the Internet: <URL:http://www.nttdocomo.co.jp/english/bin ary/pdf/corporate/technology/rd/technical_j ournal/bn/vol8_1/vol8_1_047en.pdf> [retrieved on 2010-09-01]
- BECKER: 'TriVision User Manual', 31 December 2005, BECKER

## Description

### FIELD OF THE INVENTION

The present invention relates to a mobile terminal, and more particularly, to a mobile terminal and method of managing a channel list therein.

### DISCUSSION OF THE RELATED ART

A mobile terminal Is a device which may be configured to perform various functions. Examples of such functions include data and voice communications, capturing Images and video via a camera, recording audio, playing music files via a speaker system, and displaying images and video on a display. Some mobile terminals Include additional functionality which supports game playing, while other mobile terminals are configured as multimedia players. More recently, mobile terminals have been configured to receive broadcast and multicast signals which permit viewing of content such as videos and television programs.

Efforts are ongoing to support and increase the functionality of mobile terminals. Such efforts include software and hardware Improvements, as well as changes and Improvements in the structural components which form the mobile terminal.

In a related art broadcast receiving terminal, a channel list is displayed and a user selects a specific broadcast channel Included in the displayed channel list. The broadcast receiving terminal then outputs a broadcast signal provided on the selected broadcast channel.

European patent application EP 1 753 229 discloses a broadcast receiving terminal which searches a list of broadcasting channels in a specific area by detecting its location information code. European patent application EP 1 802 107 discloses a broadcast receiving terminal which switches form a set channel list to another channel list if It falls to select a station In the set channel list. Finally, European patent application EP 2 066 117 discloses a broadcast receiving terminal wherein a channel list is displayed and updated In real-time according to a result of a channel scan.

However, according to the related art, a broadcast channel, which is substantially non-viewable due to weak signal strength, is included in a channel list. Therefore, there Is a need to provide a user with a channel list including only broadcast channels that provide substantially viewable contents.

### SUMMARY OF THE INVENTION

In accordance with an embodiment, a mobile terminal comprises the features of claim 1.

In accordance with another embodiment, there Is provided a method of managing a channel list In a mobile terminal comprising the features of claim 10.
Further embodiments of the mobile terminal and the method of managing a channel list according to the present invention are described in the dependent claims.

These and other embodiments will also become readily apparent to those skilled in the art from the following detailed description of the embodiments having reference to the attached figures, the Invention not being limited to any particular embodiment disclosed.

### BRIEF DESCRIPTION OF THE DRAWINGS

The above and other aspects, features, and advantages of the present invention will become more apparent upon consideration of the following description of preferred embodiments, taken In conjunction with the accompanying drawings.

FIG. 1 is a block diagram of a mobile terminal in accordance with an embodiment of the present invention.

FIG. 2A is a perspective view of a front side of a mobile terminal according to an embodiment of the present invention.

FIG. 2B is a rear view of the mobile terminal shown in FIG. 2A.

FIG. 3A and FIG. 3B show an identity device that is detachable from a terminal according to an embodiment of the present invention.

FIG. 4 is a block diagram of a wireless communication system operable with the mobile terminal of FIGs. 1-3B.

FIG. 5 is a flowchart illustrating managing a channel list in a mobile terminal according to an embodiment of the present invention.

FIGs. 6A to 8B are views of a display screen displaying a channel list in a mobile terminal according to an embodiment of the present invention.

FIGs. 9A to 9F are views of a display screen displaying a channel list updated according to a result of frequency band scan in a mobile terminal according to an embodiment of the present invention.

FIGS. 10A to 10C are views of a display screen displaying a channel list updated by an add/delete selection made by a user in a mobile terminal according to an embodiment of the present invention.

FIGS. 11A to 11C are views of a display screen displaying contents from selected broadcast channels in a mobile terminal according to an embodiment of the present invention during a broadcast outputting mode.

### DETAILED DESCRIPTION OF THE INVENTION

In the following detailed description, reference is made to the accompanying drawing figures which form a part hereof, and which show by way of illustration specific embodiments of the invention. It is to be understood by those of ordinary skill in this technological field that other embodiments may be utilized, and structural, electrical, as well as procedural changes may be made without departing from the scope of the present invention. Wherever possible, the same reference numbers will be used throughout the drawings to refer to the same or similar parts.

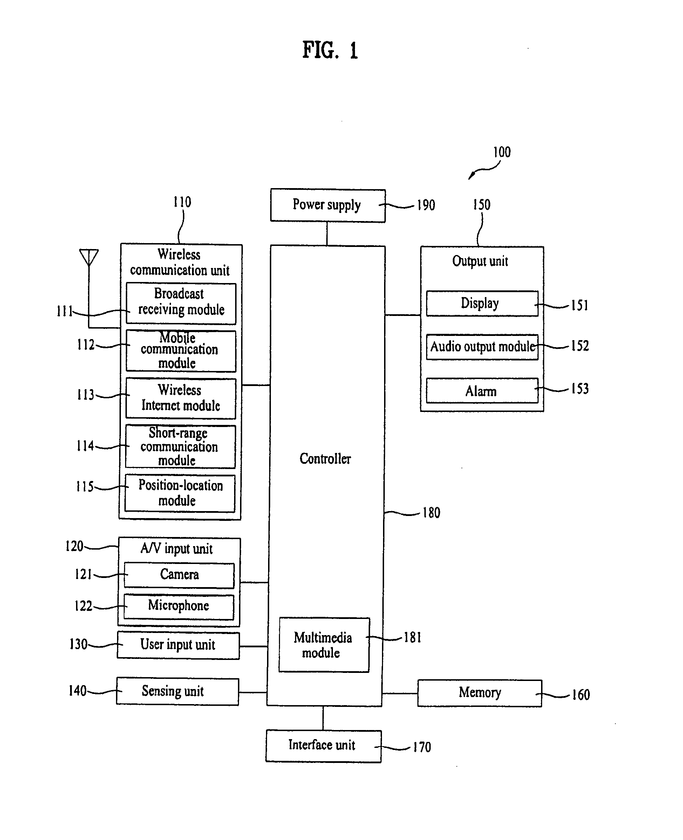

FIG. 1 is a block diagram of mobile terminal 100 in accordance with an embodiment of the present invention. The mobile terminal 100 may be implemented using a variety of different types of mobile terminals. Examples of such mobile terminals include mobile phones, user equipments, smart phones, computers, digital broadcast mobile terminals, personal digital assistants (PDA), portable multimedia players (PMP) and navigators. By way of non-limiting example only, further description will be with regard to a mobile terminal. However, such teachings apply equally to other types of mobile terminals. While FIG. 1 shows the mobile terminal 100 having various components, it is understood that implementing all of the illustrated components is not a requirement, and greater or fewer components may alternatively be implemented.

FIG. 1 shows a wireless communication unit 110 configured with several commonly implemented components. For instance, the wireless communication unit 110 typically includes one or more components which permit wireless communication between the mobile terminal 100 and a wireless communication system or network within which the mobile terminal is located.

The broadcast receiving module 111 receives a broadcast signal and/or broadcast associated information from an external broadcast managing entity via a broadcast channel. The broadcast channel may include a satellite channel and a terrestrial channel. The broadcast managing entity refers generally to a system which transmits a broadcast signal and/or broadcast associated information. Examples of broadcast associated information include information associated with a broadcast channel, a broadcast program, a broadcast service provider, and the like. For instance, broadcast associated information may include an electronic program guide (EPG) of digital multimedia broadcasting (DMB) and electronic service guide (ESG) of digital video broadcast-handheld (DVB-H).

The broadcast signal may be implemented as a TV broadcast signal, a radio broadcast signal, and a data broadcast signal, among others. If desired, the broadcast signal may further include a broadcast signal combined with a TV or radio broadcast signal.

The broadcast receiving module 111 may be configured to receive broadcast signals transmitted from various types of broadcast systems. By non-limiting example, such broadcasting systems include digital multimedia broadcasting-terrestrial (DMB-T), digital multimedia broadcasting-satellite (DMB-S), digital video broadcast-handheld (DVB-H), the data broadcasting system known as media forward link only (MediaFLO®) and integrated services digital broadcast-terrestrial (ISDB-T). Receiving of multicast signals is also possible. If desired, data received by the broadcast receiving module 111 may be stored in a suitable device, such as memory 160.

The mobile communication module 112 transmits/receives wireless signals to/from one or more network entities such as a base station or Node-B. Such signals may represent audio, video, multimedia, control signaling, and data, among others.

The wireless internet module 113 supports Internet access for the mobile terminal 100. This module may be internally or externally coupled to the mobile terminal 100.

The short-range communication module 114 facilitates relatively short-range communications. Suitable technologies for implementing this module include radio frequency identification (RFID), infrared data association (IrDA), ultra-wideband (UWB), as well as the networking technologies commonly referred to as Bluetooth and ZigBee, to name a few.

Position-location module 115 identifies or otherwise obtains the location of the mobile terminal 100. If desired, this module may be implemented using global positioning system (GPS) components which cooperate with associated satellites, network components, and combinations thereof.

Audio/video (A/V) input unit 120 is configured to provide audio or video signal input to the mobile terminal. As shown, the A/V input unit 120 includes a camera 121 and a microphone 122. The camera 121 receives and processes image frames of still pictures or video.

The microphone 122 receives an external audio signal while the mobile terminal 100 is in a particular mode, such as phone call mode, recording mode and voice recognition. This audio signal is processed and converted into digital data. The mobile terminal 100, and in particular, A/V input unit 120, typically includes assorted noise removing algorithms to remove noise generated in the course of receiving the external audio signal. Data generated by the A/V input unit 120 may be stored in memory 160, utilized by output unit 150, or transmitted via one or more modules of communication unit 110. If desired, two or more microphones 122 and/or cameras 121 may be used.

The user input unit 130 generates input data responsive to user manipulation of an associated input device or devices. Examples of such devices include a keypad, a dome switch, a jog wheel, a jog switch, and a touchpad such as static pressure/capacitance. A specific example is one in which the user input unit 130 is configured as a touchpad in cooperation with a touchscreen display.

The sensing unit 140 provides status measurements of various aspects of the mobile terminal 100. For instance, the sensing unit 140 may detect an open/close status of the mobile terminal 100, relative positioning of components, such as display and keypad, of the mobile terminal 100, a change of position of the mobile terminal or a component of the mobile terminal, a presence or absence of user contact with the mobile terminal, orientation or acceleration/deceleration of the mobile terminal. As an example, consider the mobile terminal 100 being configured as a slide-type mobile terminal. In this configuration, the sensing unit 140 may sense whether a sliding portion of the mobile terminal 100 is open or closed. Other examples include the sensing unit 140 sensing the presence or absence of power provided by the power supply 190, the presence or absence of a coupling or other connection between the interface unit 170 and an external device.

The interface unit 170 is often implemented to couple the mobile terminal 100 with external devices. Typical external devices include wired/wireless headphones, external chargers, power supplies, earphones, microphones, and storage devices configured to store data such as audio, video, and pictures, among others. The interface unit 170 may be configured using a wired/wireless data port, a card socket for coupling to a memory card and a device equipped with identity module, audio input/output ports and video input/output ports.

In this case, the identity module is a chip that stores various kinds of information for identifying or authenticating use authority of the mobile terminal 100. The identity module can include one of a user identity module (UIM), a subscriber identity module (SIM), a universal subscriber identity module (USIM) and the like. In particular, the identity module can include a module for identifying or authenticating authority for a broadcast purchase and/or a broadcast viewing using the mobile terminal 100. A device provided with the identity module or identity device can be manufactured as a smart card. Hence, the identity device can be connected to the mobile terminal 100 via a port for connecting the identity device.

The output unit 150 generally includes various components which support the output requirements of the mobile terminal 100. Display 151 is typically implemented to visually display information associated with the mobile terminal 100. For instance, if the mobile terminal 100 is operating in a phone call mode, the display will generally provide a user interface or graphical user interface which includes information associated with placing, conducting, and terminating a phone call. As another example, if the mobile terminal 100 is in a video call mode or a photographing mode, the display 151 may additionally or alternatively display images which are associated with these modes.

One particular implementation includes the display 151 configured as a touchscreen working in cooperation with an input device, such as a touchpad. This configuration permits the display 151 to function both as an output device and an input device.

The display 151 may be implemented using known display technologies including, for example, a liquid crystal display (LCD), a thin film transistor-liquid crystal display (TFT-LCD), an organic light-emitting diode display (OLED), a flexible display and a three-dimensional display. The mobile terminal 100 may include one or more of such displays. An example of a two-display embodiment is one in which one display is configured as an internal display which is viewable when the mobile terminal 100 is in an opened position and a second display configured as an external display which is viewable in both the open and closed positions.

Further, a proximity sensor may be provided within the touchscreen or around the touchscreen. Alternatively, the proximity sensor can be provided within the sensing unit 140. The proximity sensor is a sensor that detects a presence or absence of an object approaching a prescribed detecting surface or an object existing around the proximity sensor using an electromagnetic field strength or infrared ray without direct contact. Hence, in general, the proximity sensor has durability longer than that of a contact type sensor and also has utility wider than that of the contact type sensor.

The proximity sensor can include one of a transmittive photoelectric sensor, a direct reflective photoelectric sensor, a mirror reflective photoelectric sensor, a radio frequency oscillation proximity sensor, an electrostatic capacity proximity sensor, a magnetic proximity sensor, an infrared proximity sensor and the like.

One example for the operational principle of the radio frequency oscillation proximity sensor is explained as follows. First of all, while an oscillation circuit is oscillating at a full-wave radio frequency, if an object approaches in the vicinity of the sensor detecting surface, oscillation amplitude of the oscillation circuit attenuates or stops. Such a variation is converted to an electric signal to detect a presence or non-presence of the object. Therefore, even if a different substance except a metallic substance is placed between the radio frequency oscillation proximity sensor and the object, the proximity switch is able to detect a specific object without interference with the different substance.

Although the proximity sensor is not provided, in case that the touchscreen is an electrostatic type, the proximity sensor can be configured to detect proximity of a pointer using a variation of an electric field according to the proximity of the pointer. Therefore, if the pointer is located in the vicinity of the touchscreen despite not contacting the touchscreen, it is able to detect the position of the pointer and the distance between the pointer and the touchscreen. In the following description, for clarity, an action that a pointer approaches without contacting the touchscreen to be recognized as located on the touchscreen is named 'proximity touch'. An action that a pointer actually touches the touchscreen is named 'contact touch'. The meaning of the position on the touchscreen proximity-touched by the pointer means the position of the pointer which vertically opposes the touchscreen when the pointer performs the proximity touch.

The proximity sensor detects a proximity touch and a proximity touch pattern such as a proximity touch distance, a proximity touch duration, a proximity touch position, and a proximity touch shift state. Information corresponding to the detected proximity touch action and the detected proximity touch pattern can be output to the touchscreen.

FIG. 1 further shows output unit 150 having an audio output module 152 which supports the audio output requirements of the mobile terminal 100. The audio output module is often implemented using one or more speakers, buzzers, other audio producing devices, and combinations thereof. The audio output module functions in various modes including call-receiving mode, call-placing mode, recording mode, voice recognition mode and broadcast reception mode. During operation, the audio output module 152 outputs audio relating to a particular function such as call received, message received, and errors.

The output unit 150 is further shown having an alarm 153, which is commonly used to signal or otherwise identify the occurrence of a particular event associated with the mobile terminal. Typical events include call received, message received and user input received. An example of such output includes the providing of tactile sensations, such as vibration, to a user. For instance, the alarm 153 may be configured to vibrate responsive to the mobile terminal 100 receiving a call or message. As another example, vibration is provided by alarm 153 responsive to receiving user input at the mobile terminal 100, thus providing a tactile feedback mechanism. It is understood that the various output provided by the components of output unit 150 may be separately performed, or such output may be performed using any combination of such components.

The memory 160 is generally used to store various types of data to support the processing, control, and storage requirements of the mobile terminal 100. Examples of such data include program instructions for applications operating on the mobile terminal 100, contact data, phonebook data, messages, pictures, and video. The memory 160 shown in FIG. 1 may be implemented using any type or combination of suitable volatile and non-volatile memory or storage devices including random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, card-type memory, or other similar memory or data storage device.

The controller 180 typically controls the overall operations of the mobile terminal 100. For instance, the controller 180 performs the control and processing associated with voice calls, data communications, video calls, camera operations and recording operations. If desired, the controller 180 may include a multimedia module 181 which provides multimedia playback. The multimedia module 181 may be configured as part of the controller 180, or this module may be implemented as a separate component.

The controller 180 is able to perform pattern recognizing processing for recognizing a handwriting input performed on the touchscreen as a character or recognizing a picture drawing input performed on the touchscreen as an image.

The power supply 190 provides power required by the various components for the mobile terminal 100. The provided power may be internal power, external power, or combinations thereof.

Various embodiments described herein may be implemented in a computer-readable medium using, for example, computer software, hardware, or some combination thereof. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof. In some cases, such embodiments are implemented by the controller 180.

For a software implementation, the embodiments described herein may be implemented with separate software modules, such as procedures and functions, each of which perform one or more of the functions and operations described herein. The software codes can be implemented with a software application written in any suitable programming language and may be stored in memory 160, and executed by a controller 180 or processor.

The mobile terminal 100 may be implemented in a variety of different configurations. Examples of such configurations include folder-type, slide-type, bar-type, rotational-type, swing-type and combinations thereof. For clarity, further disclosure will primarily relate to a slide-type mobile terminal. However, such teachings apply equally to other types of mobile terminals.

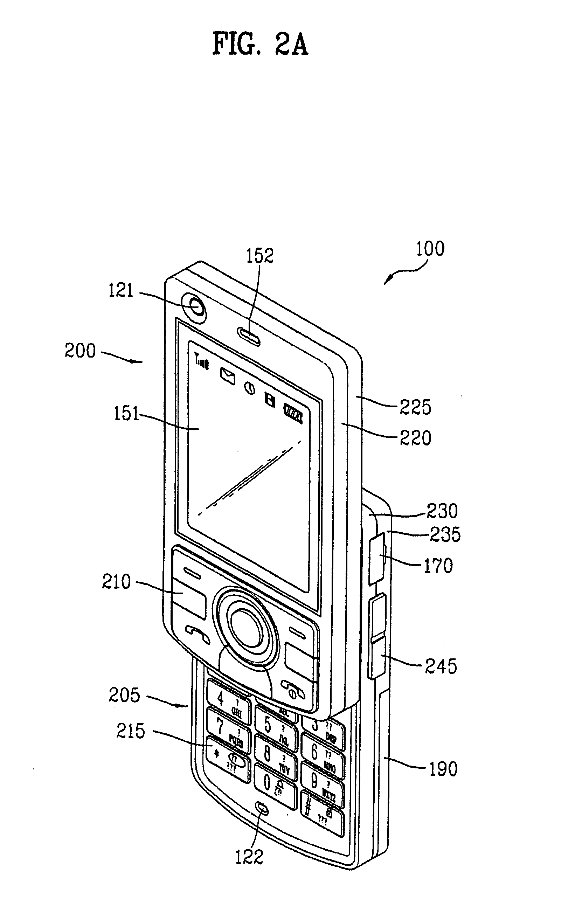

FIG. 2A is a perspective view of a front side of a mobile terminal 100 according to an embodiment of the present invention. In FIG. 2A, the mobile terminal 100 is shown having a first body 200 configured to slideably cooperate with a second body 205. The user input unit is implemented using function keys 210 and keypad 215. The function keys 210 are associated with first body 200, and the keypad 215 is associated with second body 205. The keypad includes various keys, such as numbers, characters, and symbols, to enable a user to place a call, prepare a text or multimedia message, and otherwise operate the mobile terminal 100.

The first body 200 slides relative to second body 205 between open and closed positions. In a closed position, the first body 200 is positioned over the second body 205 in such a manner that the keypad 215 is substantially or completely obscured by the first body 200. In the open position, user access to the keypad 215, as well as the display 151 and function keys 210, is possible. The function keys 210 are convenient to a user for entering commands such as start, stop and scroll.

The mobile terminal 100 is operable in either a standby mode, during which is able to receive a call or message, receive and respond to network control signaling, or an active call mode. Typically, the mobile terminal 100 functions in a standby mode in the closed position, and an active mode in the open position. This mode configuration may be changed as required or desired.

The first body 200 is shown formed from a first case 220 and a second case 225, and the second body 205 is shown formed from a first case 230 and a second case 235. The first and second cases 220, 225, 230, 235 are usually formed from a suitably rigid material such as injection molded plastic, or formed using metallic material such as stainless steel (STS) and titanium (Ti).

If desired, one or more intermediate cases may be provided between the first and second cases 220, 225, 230, 235 of one or both of the first and second bodies 200, 205. The first and second bodies 200, 205 are typically sized to receive electronic components necessary to support operation of the mobile terminal 100.

The first body 200 is shown having a camera 121 and audio output unit 152, which is configured as a speaker, positioned relative to the display 151. If desired, the camera 121 may be constructed in such a manner that it can be selectively positioned, for example, rotated or swiveled, relative to first body 200.

The function keys 210 are positioned adjacent to a lower side of the display 151. The display 151 is shown implemented as an LCD or OLED. Recall that the display 151 may also be configured as a touchscreen having an underlying touchpad which generates signals responsive to user contact, for example, via a finger, stylus, and the like, with the touchscreen.

Second body 205 is shown having a microphone 122 positioned adjacent to keypad 215, and side keys 245, which are one type of a user input unit, positioned along the side of second body 205. Preferably, the side keys 245 may be configured as hot keys, such that the side keys are associated with a particular function of the mobile terminal 100. An interface unit 170 is shown positioned adjacent to the side keys 245, and a power supply 190 in a form of a battery is located on a lower portion of the second body 205.

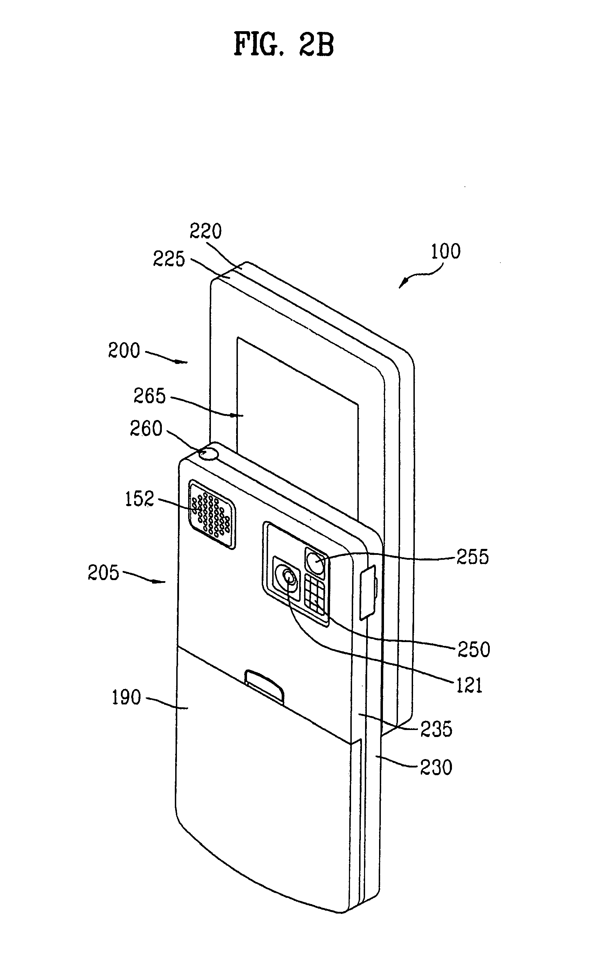

FIG. 2B is a rear view of the mobile terminal 100 shown in FIG. 2A. FIG. 2B shows the second body 205 having a camera 121, and an associated flash 250 and mirror 255. The flash 250 operates in conjunction with the camera 121 of the second body 205. The mirror 255 is useful for assisting a user to position camera 121 in a self-portrait mode. The camera 121 of the second body 205 faces a direction which is opposite to a direction faced by camera 121 of the first body 200 (FIG. 2A). Each of the cameras 121 of the first and second bodies 200, 205 may have the same or different capabilities.

In an embodiment, the camera 121 of the first body 200 operates with a relatively lower resolution than the camera 121 of the second body 205. Such an arrangement works well during a video conference, for example, in which reverse link bandwidth capabilities may be limited. The relatively higher resolution of the camera 121 of the second body 205 (FIG. 2B) is useful for obtaining higher quality pictures for later use or for communicating to others.

The second body 205 also includes an audio output module 152 configured as a speaker, and which is located on an upper side of the second body. If desired, the audio output modules 152 of the first and second bodies 200, 205 may cooperate to provide stereo output. Moreover, either or both of these audio output modules 152 may be configured to operate as a speakerphone.

A broadcast signal receiving antenna 260 is shown located at an upper end of the second body 205. Antenna 260 functions in cooperation with the broadcast receiving module 111. If desired, the antenna 260 may be fixed or configured to retract into the second body 205. The rear side of the first body 200 includes slide module 265, which slideably couples with a corresponding slide module located on the front side of the second body 205.

It is understood that the illustrated arrangement of the various components of the first and second bodies 200, 205 may be modified as required or desired. In general, some or all of the components of one body may alternatively be implemented on the other body. In addition, the location and relative positioning of such components are not critical to many embodiments, and as such, the components may be positioned at locations which differ from those shown by the representative figures.

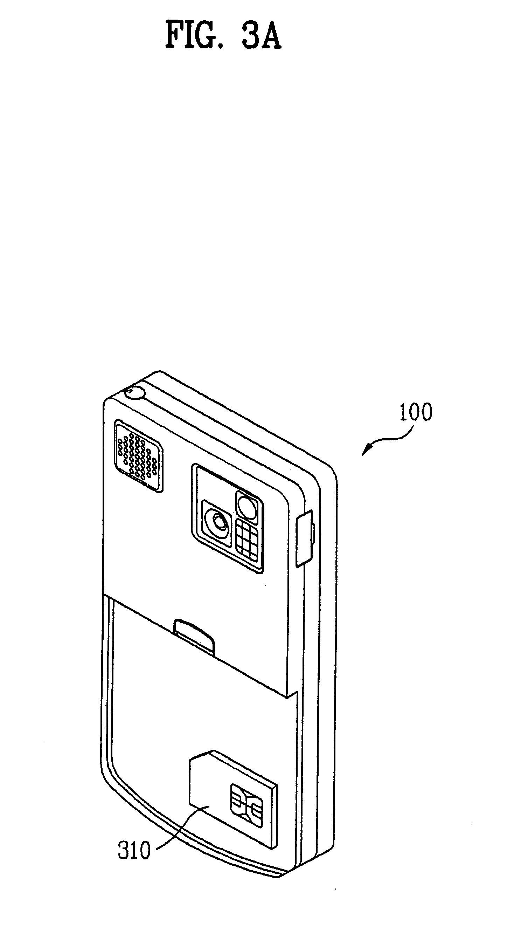

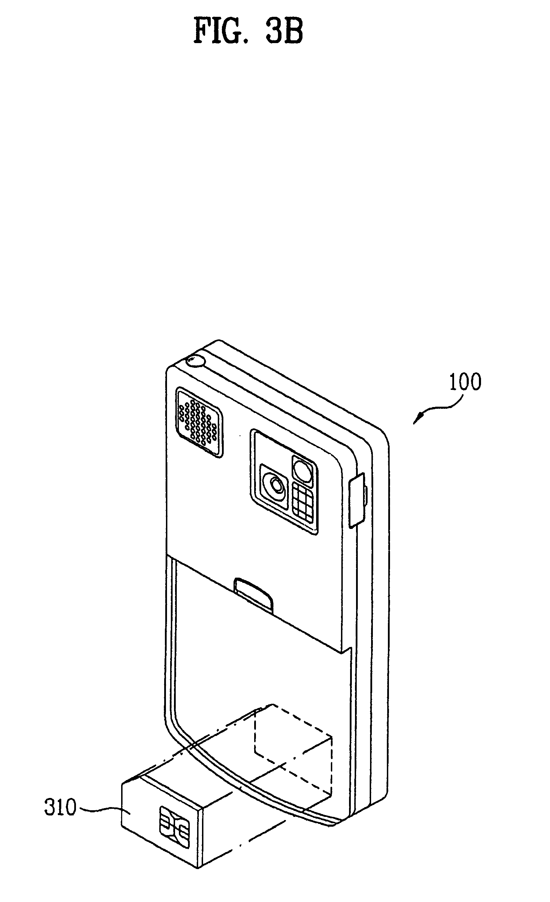

FIG. 3A and FIG. 3B are perspective views of an identity device that is detachable from a mobile terminal 100 according to an embodiment of the present invention. In this case, the identity device includes an SIM card, for example.

Referring to FIG. 3A and FIG. 3B, the identity device 310 is detachably provided to the mobile terminal 100. Hence, a new identity device can be loaded in the mobile terminal 100 by replacing an old identity device. Optionally, the identity device 310 can be loaded in the mobile terminal 100 by being combined with the interface unit 170. Alternatively, the identity device 310 can be provided to the mobile terminal 100 by being connected to a connector separately provided for the connection with the identity device 310.

A connecting means for connecting the identity device 310 and the mobile terminal 100 together can be provided to any one of backside, lateral sides, a front side and the like of the mobile terminal.

The mobile terminal 100 shown in FIGS. 1 to 3B can be configured to be operable in a wire/wireless communication system, a satellite based communication system or a communication system capable of transmitting data carried on frames or packets. The mobile terminal 100 of FIGs. 1-3B may be configured to operate within a communication system which transmits data via frames or packets, including both wireless and wireline communication systems, and satellite-based communication systems. Such communication systems utilize different air interfaces and/or physical layers.

Examples of such air interfaces utilized by the communication systems include example, frequency division multiple access (FDMA), time division multiple access (TDMA), code division multiple access (CDMA), and universal mobile telecommunications system (UMTS), the long term evolution (LTE) of the UMTS, and the global system for mobile communications (GSM). By way of non-limiting example only, further description will relate to a CDMA communication system, but such teachings apply equally to other system types.

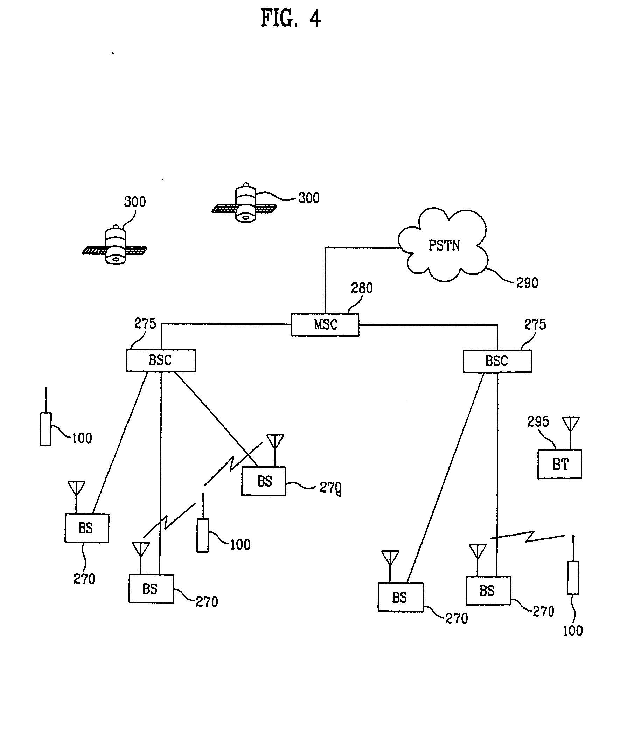

Referring now to FIG. 4, a CDMA wireless communication system is shown having a plurality of mobile terminals 100, a plurality of base stations 270, base station controllers (BSCs) 275, and a mobile switching center (MSC) 280. The MSC 280 is configured to interface with a conventional public switch telephone network (PSTN) 290. The MSC 280 is also configured to interface with the BSCs 275. The BSCs 275 are coupled to the base stations 270 via backhaul lines. The backhaul lines may be configured in accordance with any of several known interfaces including, for example, E1/T1, ATM, IP, PPP, Frame Relay, HDSL, ADSL, or xDSL. It is to be understood that the system may include more than two BSCs 275.

Each base station 270 may include one or more sectors, each sector having an omni-directional antenna or an antenna pointed in a particular direction radially away from the base station 270. Alternatively, each sector may include two antennas for diversity reception. Each base station 270 may be configured to support a plurality of frequency assignments, with each frequency assignment having a particular spectrum, for example, 1.25 MHz or 5 MHz.

The intersection of a sector and frequency assignment may be referred to as a CDMA channel. The base stations 270 may also be referred to as base station transceiver subsystems (BTSs). In some cases, the term "base station" may be used to refer collectively to a BSC 275, and one or more base stations 270. The base stations may also be denoted "cell sites." Alternatively, individual sectors of a given base station 270 may be referred to as cell sites.

A broadcasting transmitter 295 is shown broadcasting to mobile terminals 100 operating within the system. The broadcast receiving module 111 of the mobile terminal 100 is typically configured to receive broadcast signals transmitted by the broadcasting transmitter 295. Similar arrangements may be implemented for other types of broadcast and multicast signaling as discussed above.

FIG. 4 further depicts several global positioning system (GPS) satellites 300. Such satellites facilitate locating the position of some or all of the mobile terminals 100. Two satellites are depicted, but it is understood that useful positioning information may be obtained with greater or fewer satellites. The position-location module 115 (FIG. 1) of the mobile terminal 100 is typically configured to cooperate with the satellites 300 to obtain desired position information. It is to be appreciated that other types of position detection technology, for example, location technology that may be used in addition to or instead of GPS location technology, may alternatively be implemented. If desired, some or all of the GPS satellites 300 may alternatively or additionally be configured to provide satellite DMB transmissions.

During typical operation of the wireless communication system, the base stations 270 receive sets of reverse-link signals from various mobile terminals 100. The mobile terminals 100 are engaging in calls, messaging, and other communications. Each reverse-link signal received by a given base station 270 is processed within that base station. The resulting data is forwarded to an associated BSC 275. The BSC provides call resource allocation and mobility management functionality including the orchestration of soft handoffs between base stations 270. The BSCs 275 also route the received data to the MSC 280, which provides additional routing services for interfacing with the PSTN 290. Similarly, the PSTN interfaces with the MSC 280, and the MSC interfaces with the BSCs 275, which in turn control the base stations 270 to transmit sets of forward-link signals to the mobile terminals 100.

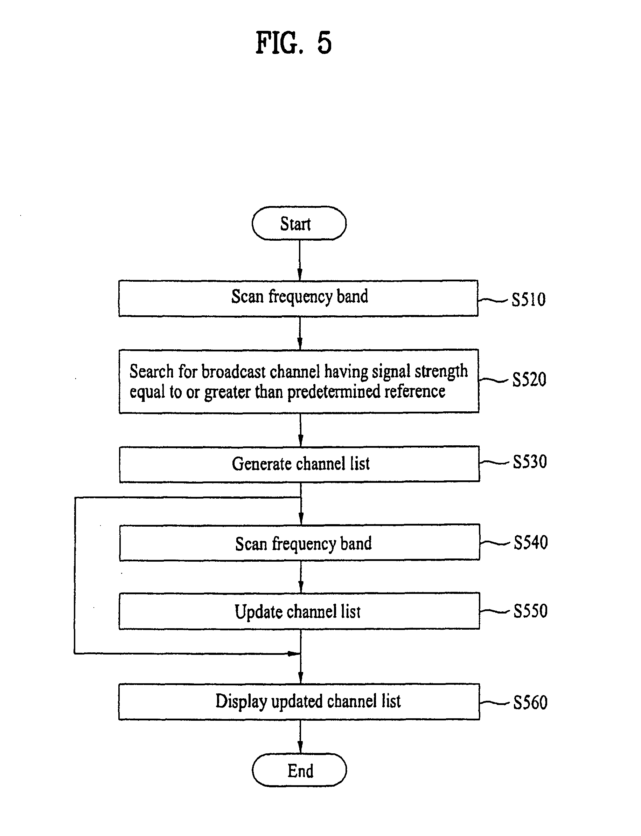

For clarity and convenience of the following description, the mobile terminal 100 described in the following description can include at least one of the elements shown in FIG. 1. In the following description, a channel list managing method in a mobile terminal according to an embodiment of the present invention is explained with reference to FIG. 5.

FIG. 5 is a flowchart illustrating a method of managing a channel list in a mobile terminal 100 according to an embodiment of the present invention. Referring to FIG. 5, the mobile terminal 100 scans at least one frequency band using the wireless communication unit 110 (S510). In particular, the mobile terminal 100 is able to perform the frequency band scanning operation using the broadcast receiving module 111 or a module separately provided for the frequency band scan.

In this case, the frequency band may mean the frequency band assigned to provide the mobile terminal 100 with a broadcast signal, such as video, audio and/or a data signal constructing a broadcast program, or broadcast relevant information, such as information relevant to a broadcast channel or a broadcast program.

An entire frequency band for providing a broadcast signal can be divided into at least one or more frequency bands. At least one or more broadcast channels can be assigned to each of the frequency bands. In particular, in DVB-T, a frequency band can be called a channel and a broadcast channel can be called a service.

During the scanning in S510, the mobile terminal 100 is able to sequentially scan at least one or more frequency bands. According to a result of the scanning, it is able to obtain a broadcast channel assigned to each of the at least one or more frequency bands and signal strength of the corresponding broadcast channel. Moreover, broadcast channels assigned to the same frequency band can have the same signal strength.

The scanning in S510 can be performed responsive to at least one of user input for selecting a frequency scan and detection of an area migration. Optionally, the scanning in S510 can be performed periodically or randomly.

For instance, the scanning in S510 can be performed when a command for selecting a frequency scan is received via the user input unit 130, when a broadcast mode for a broadcast viewing is entered using the mobile terminal 100, or when area migration of the mobile terminal is detected though the position-location module 115.

Subsequently, the mobile terminal 100 searches at least one or more broadcast channels assigned to each of the scanned frequency bands for the broadcast channel having the signal strength equal to or greater than a predetermined reference (also referred to herein as a threshold) using the scan result from the scanning in S510 (S520).

In this case, the predetermined reference can be set up by a user or can be randomly set up by the mobile terminal 100. The predetermined reference may be a minimum or threshold signal strength required for broadcast signal reception and output.

As mentioned in the foregoing description, the mobile terminal 100 is able to obtain the signal strengths of the broadcast channels assigned to each of the scanned frequency bands using the scan result of the frequency band obtained during the scanning in S510. It is understood that the frequency band scan result obtained from the scanning in S510 can be stored in the memory 160 according to a control signal of the controller 180.

The mobile terminal 100 obtains the signal strength for each broadcast channel from the memory 160 and then identifies and detects the broadcast channel having the signal strength equal to or greater than the predetermined reference. Subsequently, the mobile terminal 100 generates a channel list including the broadcast channel having the signal strength equal to or greater than the predetermined reference using the search result from the searching in S520 (S530). For instance, generating a channel list in S530 can be performed by the controller 180.

In the channel list generated in S530, the signal strengths of the broadcast channels included in the channel list can be contained. Moreover, in S530, a channel name, channel identification information, broadcast organization information per channel, information of a previous/present/next broadcast program per channel and the like can be included in the channel list. Subsequently, the mobile terminal 100 is able to display the updated channel list generated in S530 via the display 151 (S560).

The mobile terminal 100 is able to display the signal strength per broadcast channel on the generated channel list. And, the mobile terminal 100 updates the signal strength per broadcast channel using the signal strength per channel obtained from the scanning in S510 and then displays the updated signal strength per broadcast channel on the generated channel list.

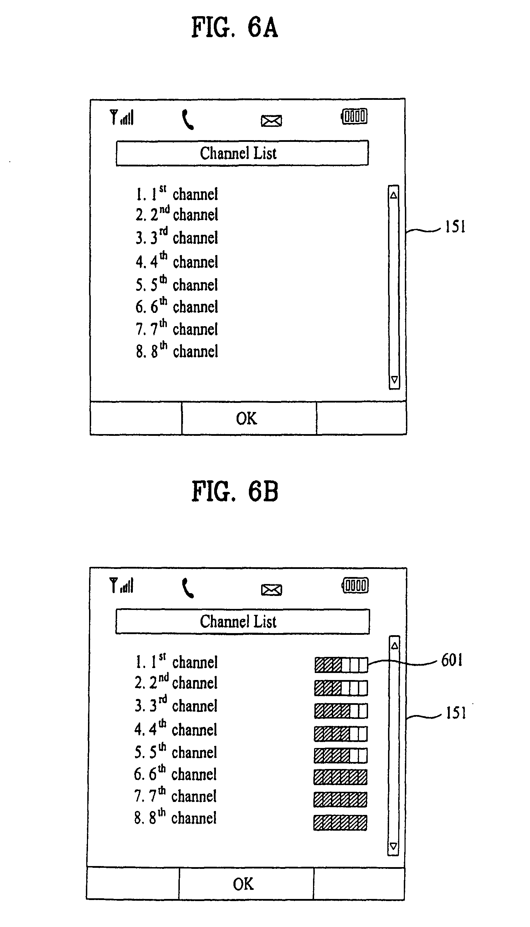

In the following description, the channel list displaying in S560 is explained in detail with reference to FIGS. 6A to 8B. For clarity and convenience of explanation, signal strength per broadcast channel is represented using a bar. For example, a dark or striped region of the bar increases in proportion to the signal strength. Moreover, it is understood that the signal strength per broadcast channel can be represented using at least one of a bar, a numeral, text, an icon, an image, an animation and the like.

FIG. 6A and FIG. 6B are views of a display screen displaying a channel list in the mobile terminal 100. Referring to FIG. 6A, the mobile terminal 100 displays a channel list including broadcast channels, for example, channels 1-8, having signal strengths equal to or greater than a predetermined reference via the display 151. Referring to FIG. 6B, the mobile terminal 100 displays signal strength of each broadcast channel included in the channel list via the display 151, the signal strength represented by the dark region in the bar 601.

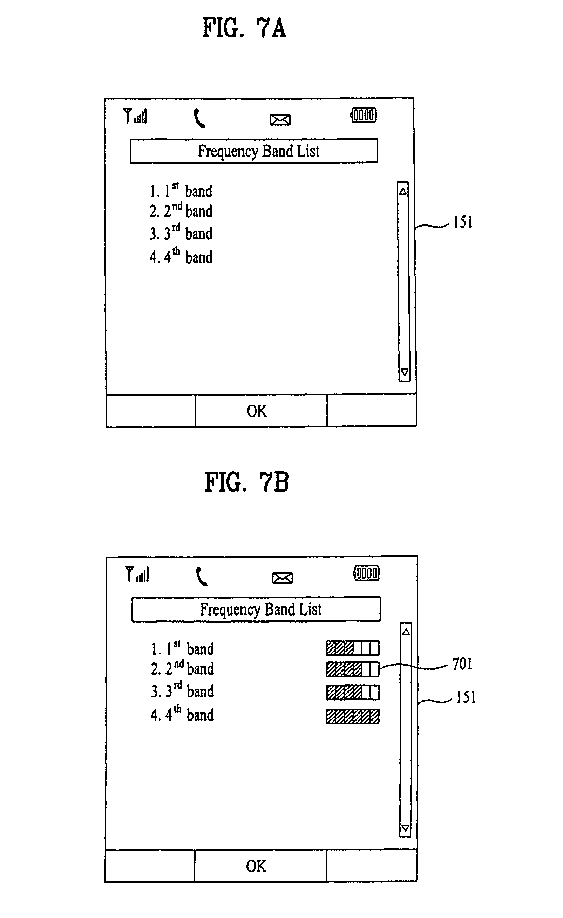

FIG. 7A and FIG. 7B are views of a display screen displaying a frequency band list in the mobile terminal 100. Referring to FIG. 7A, the mobile terminal 100 displays the frequency band list including frequency bands. In this case, at least one broadcast channel can be assigned to each of the frequency bands included in the frequency band list. If a user selects a specific frequency band from the frequency band list, the mobile terminal 100 displays a channel list including at least one broadcast channel assigned to the specific frequency band.

Referring to FIG. 7B, the mobile terminal 100 displays signal strengths of the frequency bands included in the frequency band list via the display 151. For example, the signal strength is indicated by the dark region in the bar 701. As mentioned in the foregoing description, a plurality of broadcast channels assigned to the same frequency band can have the same signal strength.

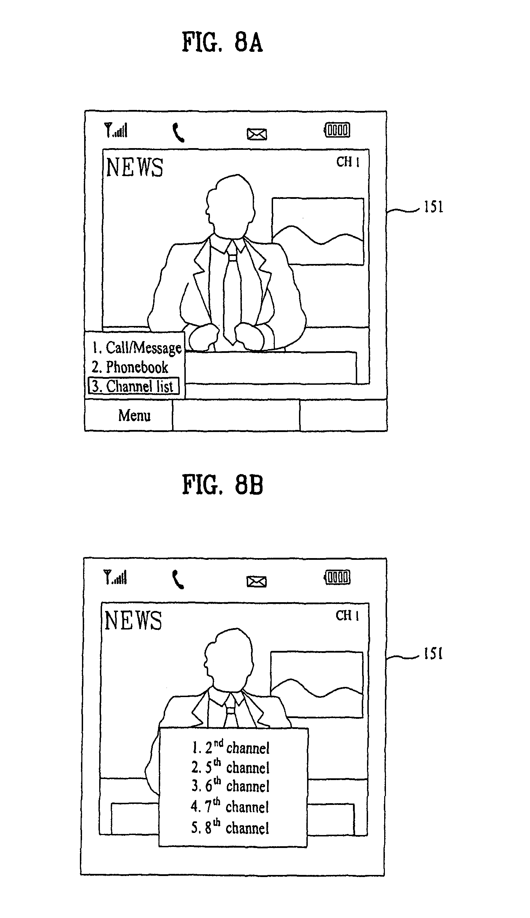

FIG. 8A and FIG. 8B are views of a display screen displaying a channel list while a broadcast is being output in the mobile terminal 100. Referring to FIG. 8A, while the mobile terminal 100 is outputting a broadcast signal provided from a channel, for example, "CH 1," a user selects a menu item 'channel list' corresponding to a channel list view function via a menu search.

Referring to FIG. 8B, the mobile terminal 100 displays a channel list including broadcast channels, for example, 2^{nd} and 5^{th}-8^{th} channels, having signal strengths equal to or greater than a predetermined reference.

Referring back to FIG. 5, the mobile terminal 100 scans at least one or more frequency bands for a specific frequency band using the wireless communication unit 110 (S540). In particular, the mobile terminal 100 performs a frequency band scanning operation using the broadcast receiving module 111 or a module separately provided for the frequency band scan.

According to a result of the scanning in S540, the mobile terminal 100 obtains the signal strength of the at least one broadcast channel assigned to the specific frequency band. In one aspect, the signal strength per broadcast channel obtained from the scanning in S540 can be stored in the memory 160 according to a control signal of the controller 180.

For instance, the specific frequency band includes at least one selected from the group of a frequency band assigned to at least one broadcast channel included or not included in the channel list generated in S530, a frequency band selected by a user and a frequency band allowed in a currently located area.

The scanning in S540 can be performed responsive to at least one of user input for selecting a frequency scan, entering a broadcast mode, or detecting area migration. Alternatively, it is able to perform the scanning in S540 randomly or periodically.

Subsequently, the mobile terminal 100 updates the channel list generated in S530 using the scan result obtained from the scanning in S540 (S550). When updating the channel list in S550, a user may select "add" or "delete" via the user input unit 130 to add a specific broadcast channel to the channel list or to delete a specific broadcast channel from the channel list generated in S530.

Subsequently, the mobile terminal 100 displays the channel list updated in S550 via the display 151 (S560). The mobile terminal 100 may display signal strength per broadcast channel on the updated channel list. Moreover, the mobile terminal 100 is able to update and display the signal strength per broadcast channel on the updated channel list using the signal strength per broadcast channel obtained from the scanning in S540.

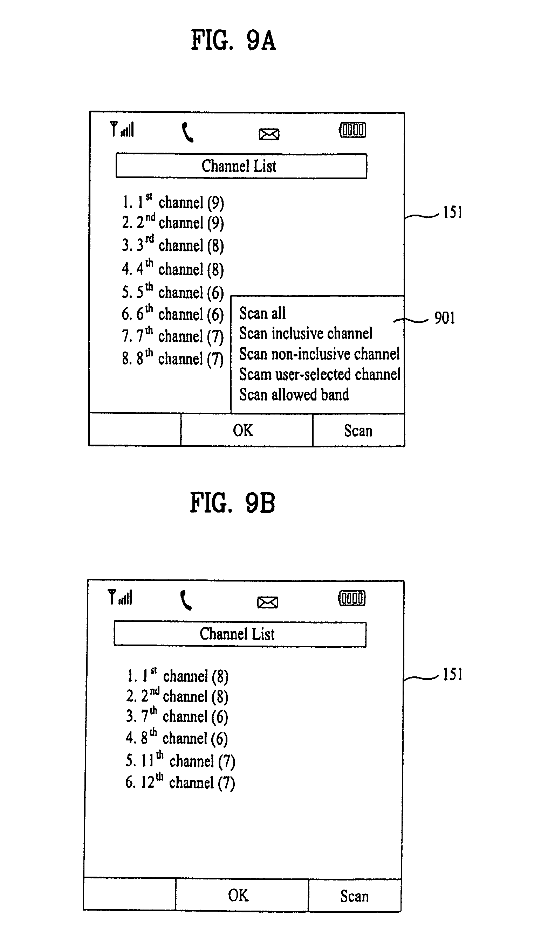

In the following description, displaying the channel list updated according to the frequency band scanning result in S560 is explained in detail with reference to FIGs. 9A to 9F. FIGs. 9A to 9F are views of a display screen displaying a channel list updated according to a result of the frequency band scan in a mobile terminal 100 according to an embodiment of the present invention.

In the following description, for clarity and convenience of explanation, whole frequency band is assumed to include first to sixth frequency bands. Further, first and second channels, third and fourth channels, fifth and sixth channels, seventh and eight channels, ninth and tenth channels, and eleventh and twelfth channels are assigned to the first to sixth frequency bands, respectively. Moreover, it is assumed that broadcast channels assigned to the same frequency band have the same signal strength. A single broadcast channel may be assigned to a single frequency band as well.

Besides, the signal strength per broadcast channel, which is displayed on a channel list, can be represented using at least one of a bar, a numeral, text, an icon, an image, an animation and the like. In the following description, for clarity and convenience of explanation, signal strength is represented using a numeral, numeral incremented in proportion to the signal strength, for example, the numeral 10 being the strongest signal.

FIG. 9A shows screen configuration for selecting a specific frequency band to scan to update a channel list in the terminal 100. Referring to FIG. 9A, if a user selects an area "Scan" for inputting a frequency band scan command to update a previously generated channel list, for example, including 1^{st}-8^{th} channels, the mobile terminal 100 displays a scan condition list 901 on the screen of the display 151. Further, the channel list shown in FIG. 9A also indicates signal strength for each channel, for example, the 1^{st} channel having the signal strength of (9) and the 8^{th} channel having the signal strength of (7).

If "scan all" is selected from the scan condition list 901 shown in FIG. 9A, the mobile terminal 100 scans the whole frequency band including the first to sixth frequency bands, updates the previously generated channel list according to the scan result, and then displays the updated channel list, as shown in FIG. 9B.

For instance, if it is determined by the mobile terminal 100 that the signal strength of each of the broadcast channels assigned to the first, fourth and sixth frequency bands is equal to or greater than a predetermined reference, the mobile terminal displays a channel list including the 1^{st}, 2^{nd}, 7^{th} 8^{th}, 11^{th} and 12^{th} channels which are the broadcast channels assigned to the first, fourth and sixth frequency bands, as shown in FIG. 9B. The mobile terminal 100 is also able to display the signal strength per broadcast channel obtained from the scan result on the updated channel list. FIG. 9B shows a display screen displaying a channel list updated according to a frequency band scan result, the updated channel list including, for example, 1^{st}, 2^{nd}, 7^{th}, 8^{th}, 11^{th}, and 12^{th} channels.

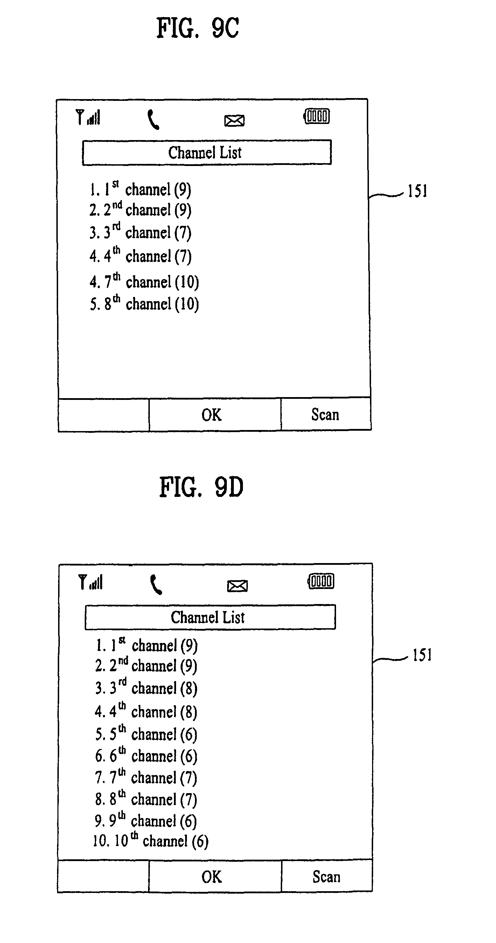

FIG. 9C also shows a display screen displaying a channel list updated according to a frequency band scan result, the frequency band scanned responsive to a different condition selected from the scan condition list 901. If "Scan inclusive channel" is selected from the scan condition list 901 shown in FIG. 9A, the mobile terminal 100 scans the first to fourth frequency bands, updates the previously generated channel list according to the scan result, and then displays the updated channel list. For instance, if it is determined that the signal strength of each of the broadcast channels assigned to the first, second and fourth frequency bands is equal to or greater than a predetermined reference, the mobile terminal 100 displays a channel list including the 1^{st}-4^{th}, 7^{th}, and 8^{th} channels which are the broadcast channels assigned to the first, second and fourth frequency bands, as shown in FIG. 9C.

FIG. 9D shows a display screen displaying a channel list updated according to a frequency band scan result, the frequency band scanned responsive to a different condition selected from the scan condition list 901. If "Scan non-inclusive channel" is selected from the scan condition list 901 shown in FIG. 9A, the mobile terminal 100 scans the fifth and sixth frequency bands to which broadcast channels not included in a previously generated channel list are assigned, updates the previously generated channel list according to the scan result, and displays the updated channel list. For instance, if it is determined that the signal strength of each of the broadcast channels assigned to the fifth frequency band is equal to or greater than a predetermined reference, the mobile terminal 100 displays an updated channel list adding the 9^{th} and 10^{th} channels assigned to the fifth frequency band to the previously generated channel list.

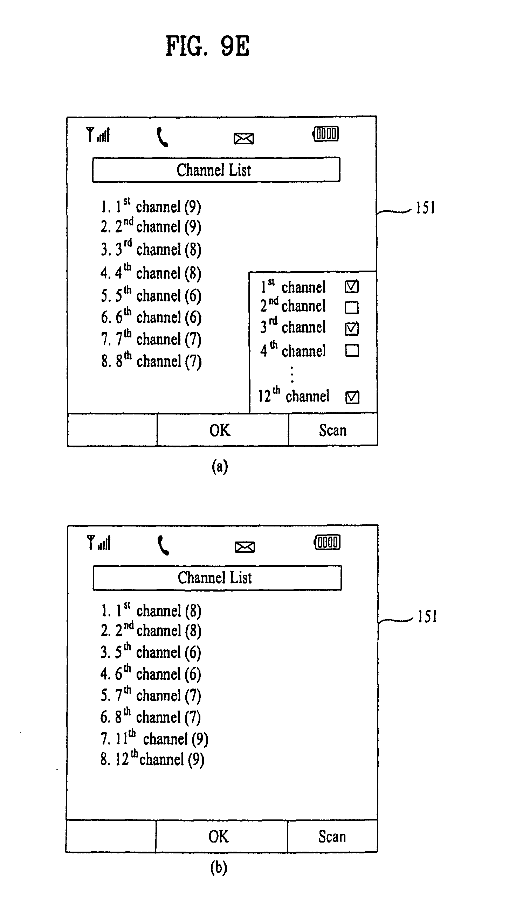

FIG. 9E shows a display screen displaying a channel list updated according to a frequency band scan result. Referring to (a) of FIG. 9E, if "Scan user-selected channel" is selected from the scan condition list 901 shown in FIG. 9A, the mobile terminal 100 displays a channel list including the 1^{st} to 12^{th} channels that are the broadcast channels assigned to the first to sixth frequency bands constructing the whole frequency band.

Referring to (b) of FIG. 9E, if the 1^{st}, 3^{rd} and 12^{th} channels are selected in (a) of FIG. 9E, the mobile terminal 100 scans the first, second and sixth frequency bands to which the 1^{st}, 3^{rd} and 12^{th} channels are assigned, respectively, updates the previously generated channel list according to the scan result, and then displays the updated channel list. For instance, according to a result of the scan, if it is determined that the signal strength of each of the first and second channels is equal to or greater than the predetermined reference and that the signal strength of the 3^{rd} channel is weaker than the predetermined reference, the mobile terminal 100 displays a channel list generated by deleting the 3^{rd} and 4^{th} channels corresponding to the broadcast channels assigned to the frequency band having the 3^{rd} channel assigned thereto from the previously generated channel list and adding the 1^{st} and 2^{nd} channels assigned to the first frequency band having the 1^{st} channel assigned thereto and the 11^{th} and 12^{th} channels assigned to the sixth frequency band having the 12^{th} channel assigned thereto to the previously generated channel list.

Alternatively, a channel list configured in a manner of deleting the 3^{rd} channel from the previously generated channel list and adding the 1^{st} and 12^{th} channels to the previously generated channel list may be displayed.

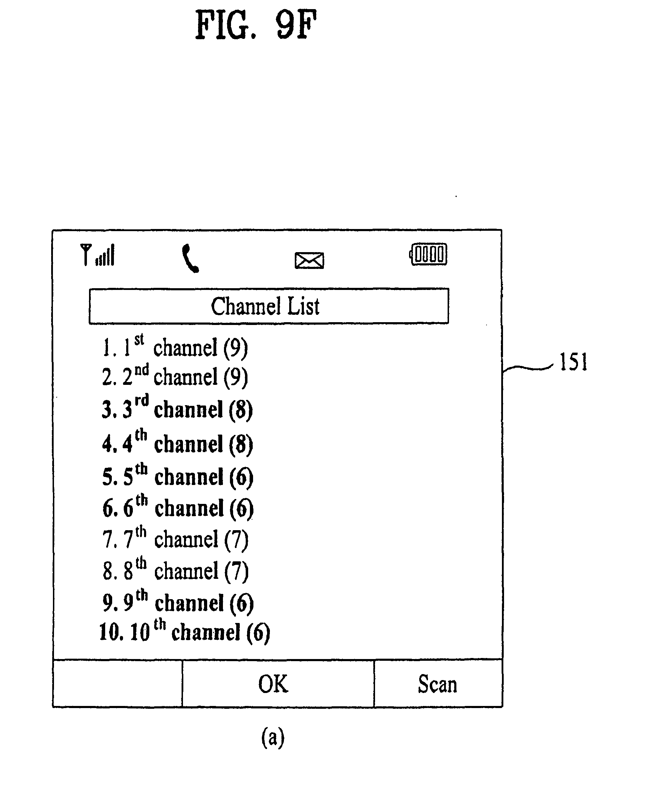

FIG. 9F shows a display screen displaying a channel list updated according to a frequency band scan result. For clarity and convenience of explanation, it is assumed that frequency bands allowed in a currently located area of the mobile terminal 100 are the second, third and fifth frequency bands. If "Scan allowed bands" is selected from the scan condition list 901 shown in FIG. 9A, the mobile terminal 100 scans the second, third and fifth frequency bands, updates a previously generated channel list according to the scan result, and then displays the updated channel list. For instance, if it is determined that the signal strength of each of the broadcast channels assigned to the second, third and fifth frequency bands is equal to or greater than a predetermined reference, the mobile terminal 100 displays a channel list generated by adding the 9^{th} and 10^{th} channels corresponding to the broadcast channels assigned to the fifth frequency band. In this case, since the broadcast channels assigned to the second and third frequency bands are already included in the channel list, it is able to update the signal strength displayed on the channel list by reflecting the scan result.

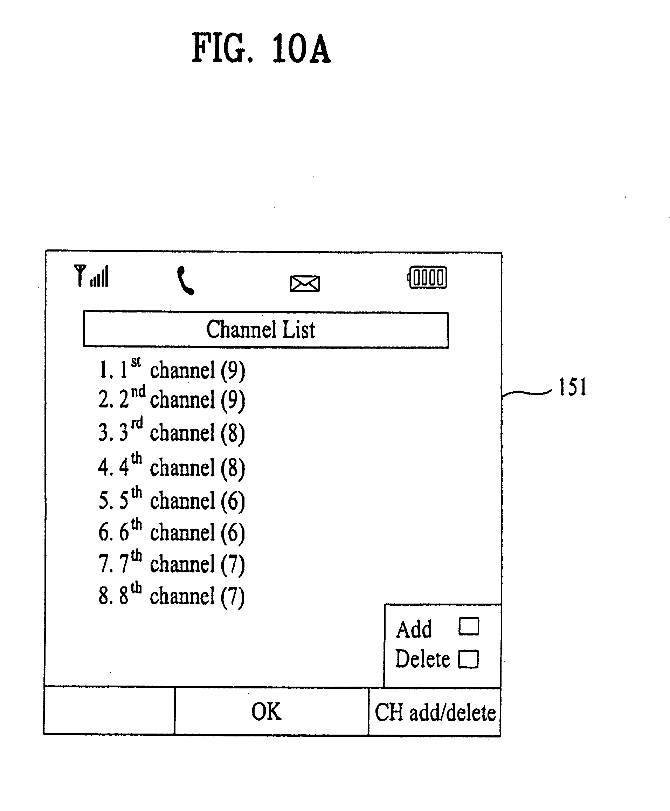

In the following description, displaying the channel list updated according to the delete/add selection made by a user in S560 is explained in detail with reference to FIGs. 10A to 10C. FIG. 10A shows a display screen configured to enable a user to input a broadcast channel delete or add command to update a channel list in the mobile terminal 100. Referring to FIG. 10A, if a user selects an area "CH add/delete" to input a broadcast channel add or delete command to update a previously generated channel list, the mobile terminal 100 displays an area to select "Add" or "Delete."

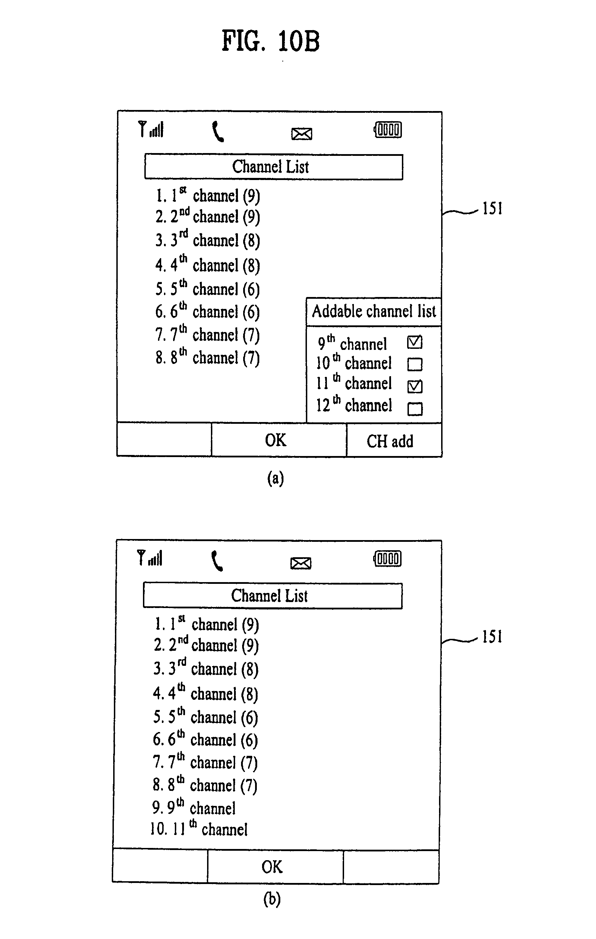

FIG. 10B shows a display screen displaying a channel list updated according to a broadcast channel add selection made by a user in the mobile terminal 100. Referring to FIG. 10B, if "Add" is selected in FIG. 10A, the mobile terminal 100 displays a channel list including addible broadcast channels, for example, 9^{th}-12^{th} channels, on a prescribed portion of the screen, as shown in (a) of FIG. 10B, and then displays a channel list by adding the broadcast channels selected by a user, for example, 9^{th} and 11^{th} channels, to the previously generated channel list, as shown in (b) of FIG. 10B. In this case, the mobile terminal 100 scans a frequency band having the 'add'-selected broadcast channel assigned thereto and is then able to display signal strength per broadcast channel obtained from the scan on the updated channel list shown in (b) of FIG. 10B.

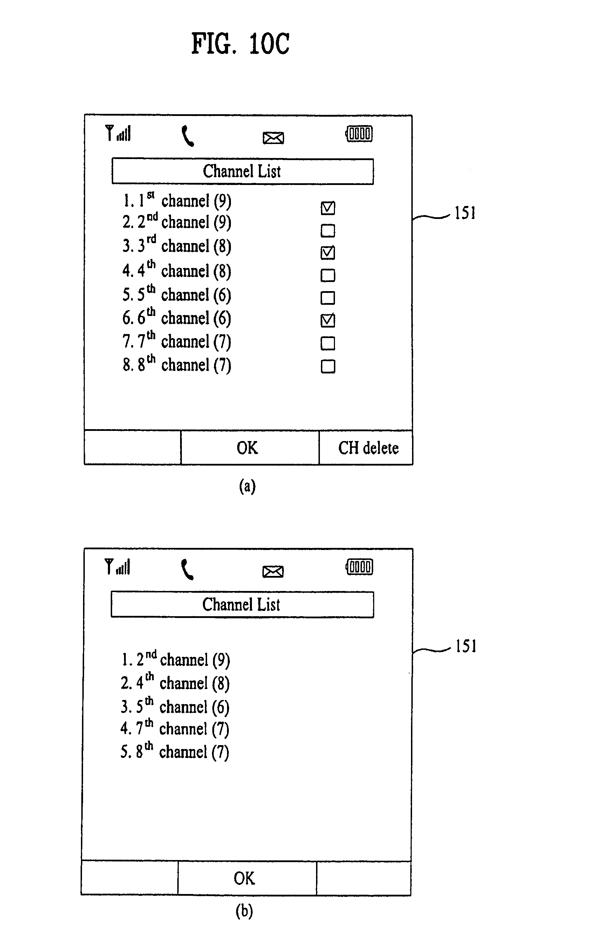

FIG. 10C shows a display screen displaying a channel list updated according to a broadcast channel delete selection made by a user in the mobile terminal 100. Referring to FIG. 10C, if "Delete" is selected in FIG. 10A, the mobile terminal 100 displays a channel list including erasable broadcast channels on a prescribed portion of the screen, as shown in (a) of FIG. 10C and then displays a channel list by deleting the broadcast channels selected by a user to the previously generated channel list, as shown in (b) of FIG. 10C. For example, the selected channels, 1^{st}, 3rd, and 6^{th} channels, are deleted from the channel list when "CH delete" is selected after selecting the channels to be deleted in the channel list.

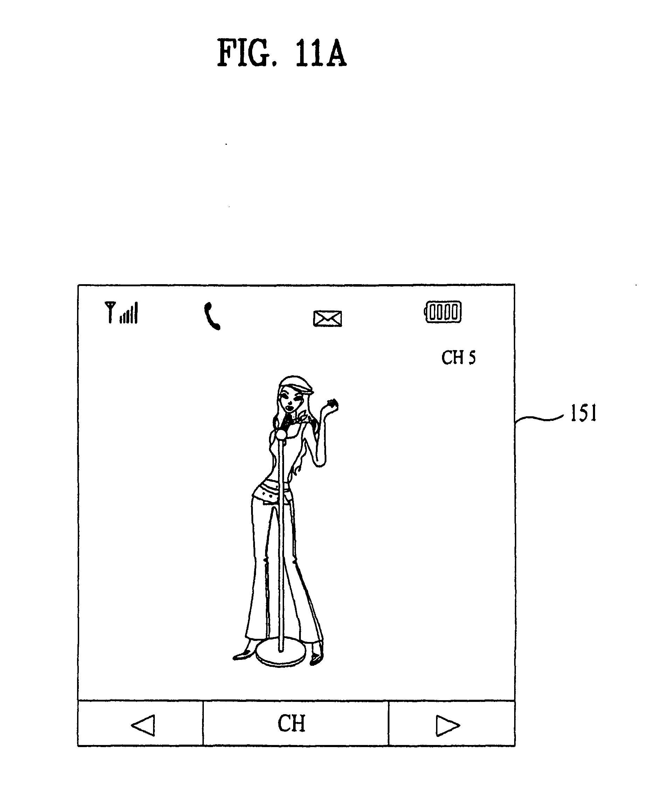

Referring back to FIG. 5, in the course of outputting a broadcast signal, the mobile terminal 100 is able to select a broadcast channel to correspond to a user selection operation with reference to the channel list generated in S530 or the channel list updated in S550. In the following description, a process for selecting a broadcast channel in the course of outputting a broadcast is explained in detail with reference to FIGS. 11 A to 11C.

FIGs. 11A to 11C are views of a display screen configured to select a broadcast channel in the mobile terminal 100 during a broadcast outputting mode. For clarity and convenience of explanation, it is assumed that a channel list includes 1^{st}, 2^{nd} , 5^{th}, 6^{th}, 9^{th} and 10^{th} channels. It is also assume that the 1^{st} and 2^{nd} channels are assigned to a first frequency band, the 5^{th} and 6^{th} channels are assigned to a third frequency band, and the 9^{th} and 10^{th} channels are assigned to a fifth frequency band.

Referring to FIG. 11A, in the course of outputting a broadcast signal provided on a specific broadcast channel, for example, fifth channel or "CH 5," the mobile terminal 100 displays an area for a broadcast channel selection on a prescribed portion of the screen. For instance, the area for the broadcast channel selection is represented as a left or down direction arrow, or a right or up direction arrow. If the left arrow is selected, a channel after the 5^{th} channel is selected from a plurality of broadcast channels in a channel list. If the right arrow is selected, a channel before the 5^{th} channel is selected from a plurality of broadcast channels constructing a channel list.

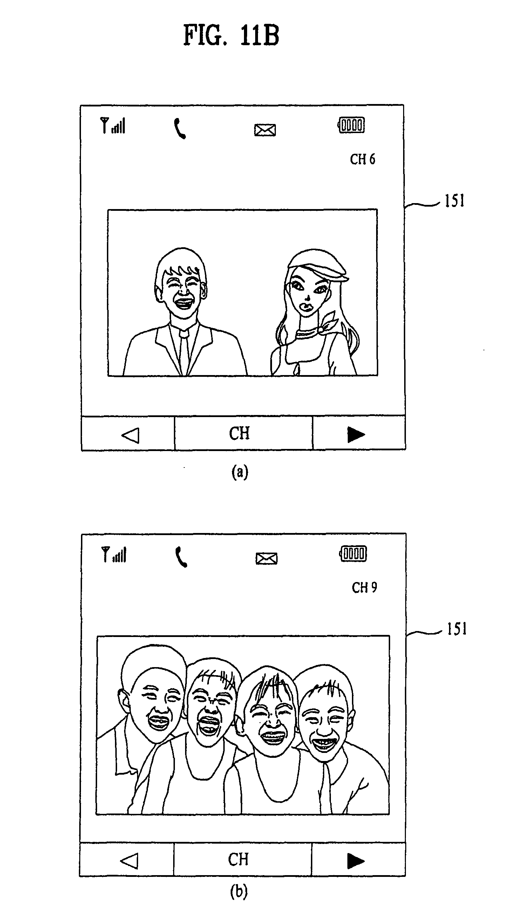

Specifically, if the right arrow is selected in FIG. 11A, the mobile terminal 100 selects the 6^{th} channel and outputs a broadcast signal provided on the 6^{th} channel, as shown in (a) of FIG. 11B. Further, if the right arrow (dark arrow) is selected in (a) of FIG. 11B, the mobile terminal 100 selects the 9^{th} channel, which is a representative channel of the fifth frequency band located next to the third frequency band having the 5^{th} channel assigned thereto and then outputs a broadcast signal provided on the 9^{th} channel or "CH 9," as shown in (b) of FIG. 11B.

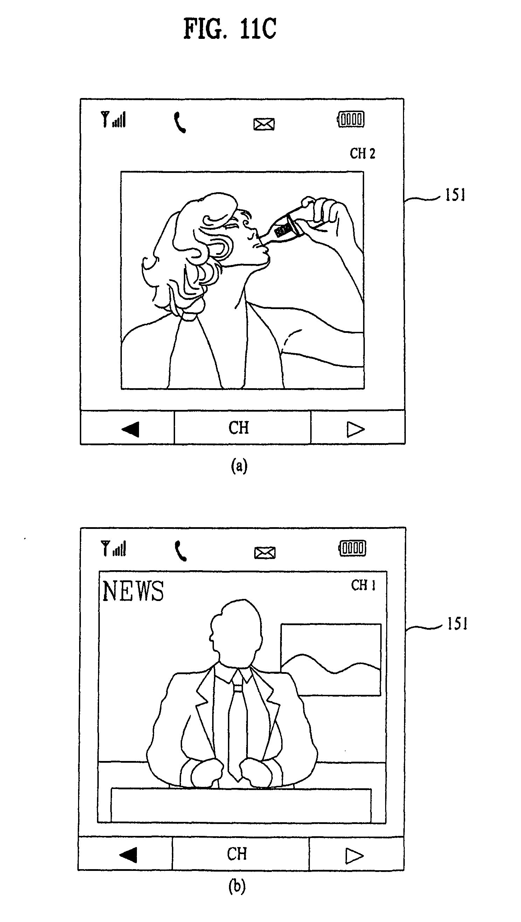

If the left arrow is selected in FIG. 11A, the mobile terminal 100 selects the 2^{nd} channel, which is located previous to the 5^{th} channel, and then outputs a broadcast signal provided on the 2^{nd} channel or "CH 2," as shown in (a) of FIG. 11C.

If the left arrow (dark arrow) Is selected In (a) of FIG. 11C, the mobile terminal 100 selects the 16^{st} channel, which Is a representative channel of the first frequency band located previous to the third frequency band having the 5^{th} channel assigned thereto, and then outputs a broadcast signal provided on the 1^{st} channel, or "CH1," as shown in (b) of FIG. 11C.

According to one embodiment of the present Invention, the above-described method of managing a channel list in a mobile terminal can be Implemented In a program recorded medium as computer-readable codes. The computer-readable media Include all kinds of recording devices In which data readable by a computer system are stored. The computer-readable media include ROM, RAM, CD-ROM, magnetic tapes, floppy discs, optical data storage devices, and the like for example and also include carrier-wave type Implementations such as transmission via Internet. The computer can include the controller 180 of the mobile terminal 100.

Accordingly, the present invention provides a user with a channel list Including viewable broadcast channels. It will be apparent to those skilled in the art that various modifications and variations can be made In the present Invention without departing from the scope of the invention, Thus, It is intended that the present invention covers the modifications and variations of this invention provided they come within the scope of the appended claims and their equivalents.

## Claims

1. A mobile terminal comprising:
a user input unit (130);
a display (151) ;
a wireless communication unit (110) configured to scan at least one frequency band, at least one broadcast channel being assigned to each of the at least one frequency band ; and
a controller (180) configured to:
set a reference value according to a user action using the user input unit for setting the reference value;
generate a channel list comprising broadcast channels each having a signal strength equal to or more than the reference value using a scan result received from the wireless communication unit (110); and
update the channel list based upon a repeated scan of a specific frequency band of the at least one frequency band first scanned by the wireless communication unit (110),
wherein the wireless communication (110) is further configured to:
scan said specific frequency band apart from all of the at least one frequency band or bands to which the broadcast channels included in the channel list are assigned, and
add the or each of the at least one broadcast channel assigned to the specific frequency band to the channel list if the signal strength of the or each of the at least one broadcast channel assigned to the specific frequency band is equal to or more than the reference value.

2. The mobile terminal of claim 1, wherein the wireless communication unit (110) is further configured to:
scan a specific frequency band to which the broadcast channels included in the channel list are assigned, and wherein the controller (180) is further configured to:
delete a specific broadcast channel of the broadcast channels included in the channel list, the signal strength of the specific broadcast channel falling below the reference value.

3. The mobile terminal of any of claims 1 or 2, wherein a different broadcast channel is assigned to each of the at least one frequency band, the wireless communication unit (110) scans a specific frequency band selected by a user, and the controller (180) adds a broadcast channel assigned to the specific frequency band to the channel list or deletes the broadcast channel assigned to the specific frequency band from the channel list based on a signal strength of the broadcast channel assigned to the specific frequency band.

4. The mobile terminal of any of claims 1-3, wherein the wireless communication unit (110) scans a frequency band designated to a currently located area, and the controller (180) adds a broadcast channel assigned to the designated frequency band to the channel list or deletes the broadcast channel assigned to the designated frequency band from the channel list based upon a signal strength of the broadcast channel assigned to the designated frequency band.

5. The mobile terminal of any of claims 1-4, wherein the user input unit (130) is configured to receive user input for at least one of adding or deleting a specific broadcast channel,
wherein the controller (180) adds the specific broadcast channel to the channel list or deletes the specific broadcast channel from the channel list responsive to the user input regardless of the signal strength of the specific broadcast channel.

6. The mobile terminal of any of claims 1-5, wherein the scan of the at least one frequency band is performed responsive to one of receiving user input for performing a frequency scan, entering a broadcast mode, or detecting an area migration of the mobile terminal.

7. The mobile terminal of any of claims 1-6, wherein the display (151) is configured to display the channel list.

8. The mobile terminal of any of claims 1-7, wherein the display (151) is configured to display an indicator on the channel list representing signal strength of the broadcast channels.

9. The mobile terminal of any of claims 1-8, wherein the user input unit (130) is configured to receive input for selecting a broadcast channel of the broadcast channels included in the channel list in a broadcast signal output mode,
wherein the controller (180) controls a broadcast signal provided on the selected broadcast channel to be output.

10. A method of managing a channel list in a mobile terminal, the method comprising:
setting a reference value according to a user action for setting the reference value
scanning (S510) at least one frequency band, at least one broadcast channel being assigned to each of the at least one frequency band;
searching (S520) for at least one broadcast channel among broadcast channels assigned to the scanned at least one frequency band using a result of the scanning, each of the searched at least one broadcast channel having a signal strength equal to or more than the reference value;
generating (S530) a channel list comprising the searched at least one broadcast channel;
repeatedly scanning (S540) a specific frequency band of the at least one frequency band scanned at the scanning step (S520) apart from all of the at least one frequency band or bands to which the at least one broadcast channel included in the channel list is assigned;
updating (S550) the channel list based upon the scan of the specific frequency band at scanning step (S540), by adding the or each of the at least one broadcast channel assigned to the specific frequency band to the channel list if the signal strength of the or each of the at least one broadcast channel assigned to the specific frequency band is equal to or more than the reference value; and
displaying (S560) the channel list.

11. The method of claim 10, wherein scanning the specific frequency band comprises scanning the specific frequency band to which the at least one broadcast channel included in the channel list is assigned; and
updating the channel list comprises deleting a specific broadcast channel of the at least one broadcast channel included in the channel list, the signal strength of the specific broadcast channel falling below the reference value.

12. The method of any of claims 10 or 11, wherein scanning the specific frequency band comprises scanning at least one of a frequency band selected by a user and a frequency band designated to a currently located area, and updating the channel list comprises adding a broadcast channel assigned to the specific frequency band to the channel list or deleting the broadcast channel assigned to the specific frequency band from the channel list based on a signal strength of the broadcast channel assigned to the specific frequency band.

13. The method of any of claims 10-12, wherein displaying the channel list comprises displaying an indicator on the channel list representing signal strength of the broadcast channels.

## Patentansprüche

1. Mobiles Endgerät, welches aufweist:
eine Benutzereingabeeinheit (130),
eine Anzeige (151),
eine drahtlose Kommunikationseinheit (110), die konfiguriert ist, um mindestens ein Frequenzband zu scannen, wobei mindestens ein Rundfunkkanal jedem von dem mindestens einen Frequenzband zugewiesen ist, und
eine Steuereinrichtung (180), die konfiguriert ist, um folgendes auszuführen:
Festlegen eines Referenzwerts entsprechend einer Benutzertätigkeit unter Verwendung der Benutzereingabeeinheit zum Festlegen des Referenzwerts,
Erzeugen einer Kanalliste, die Rundfunkkanäle aufweist, welche jeweils eine Signalstärke aufweisen, die größer oder gleich dem Referenzwert ist, unter Verwendung eines von der drahtlosen Kommunikationseinheit (110) empfangenen Scanergebnisses und
Aktualisieren der Kanalliste auf der Grundlage eines wiederholten Scans eines spezifischen Frequenzbands von dem mindestens einen zuerst von der drahtlosen Kommunikationseinheit (110) gescannten Frequenzband,
wobei die drahtlose Kommunikationseinheit (110) ferner konfiguriert ist, um folgendes auszuführen:
Scannen des spezifischen Frequenzbands, das von allen von dem mindestens einen Frequenzband oder -bändern, denen die in der Kanalliste enthaltenen Rundfunkkanäle zugewiesen sind, verschieden ist, und
Hinzufügen des oder jedes von dem mindestens einen dem spezifischen Frequenzband zugewiesenen Rundfunkkanals zu der Kanalliste, falls die Signalstärke des oder jedes von dem mindestens einen dem spezifischen Frequenzband zugewiesenen Rundfunkkanals größer oder gleich dem Referenzwert ist.

2. Mobiles Endgerät nach Anspruch 1, wobei die drahtlose Kommunikationseinheit (110) ferner konfiguriert ist, um folgendes auszuführen:
Scannen eines spezifischen Frequenzbands, dem die in der Kanalliste enthaltenen Rundfunkkanäle zugewiesen sind, wobei die Steuereinrichtung (180) ferner konfiguriert ist, um folgendes auszuführen:
Löschen eines spezifischen Rundfunkkanals von den in der Kanalliste enthaltenen Rundfunkkanälen, dessen Signalstärke unter den Referenzwert abfällt.

3. Mobiles Endgerät nach einem der Ansprüche 1 oder 2, wobei ein anderer Rundfunkkanal jedem von dem mindestens einen Frequenzband zugewiesen ist, die drahtlose Kommunikationseinheit (110) ein von einem Benutzer ausgewähltes spezifisches Frequenzband scannt und die Steuereinrichtung (180) einen dem spezifischen Frequenzband zugewiesenen Rundfunkkanal der Kanalliste hinzufügt oder den dem spezifischen Frequenzband zugewiesenen Rundfunkkanal aus der Kanalliste löscht, und zwar auf der Grundlage der Signalstärke des dem spezifischen Frequenzband zugewiesenen Rundfunkkanals.

4. Mobiles Endgerät nach einem der Ansprüche 1 bis 3, wobei die drahtlose Kommunikationseinheit (110) ein einem gegenwärtig lokalisierten Bereich zugewiesenes Frequenzband scannt und die Steuereinrichtung (180) einen dem zugewiesenen Frequenzband zugewiesenen Rundfunkkanal der Kanalliste hinzufügt oder den dem zugewiesenen Frequenzband zugewiesenen Rundfunkkanal aus der Kanalliste löscht, und zwar auf der Grundlage der Signalstärke des dem zugewiesenen Frequenzband zugewiesenen Rundfunkkanals.

5. Mobiles Endgerät nach einem der Ansprüche 1 bis 4, wobei die Benutzereingabeeinheit (130) konfiguriert ist, um eine Benutzereingabe für mindestens eines vom Hinzufügen oder vom Löschen eines spezifischen Rundfunkkanals zu empfangen,
wobei die Steuereinrichtung (180) den spezifischen Rundfunkkanal, ansprechend auf die Benutzereingabe, unabhängig von der Signalstärke des spezifischen Rundfunkkanals, zu der Kanalliste hinzufügt oder aus der Kanalliste löscht.

6. Mobiles Endgerät nach einem der Ansprüche 1 bis 5, wobei der Scan des mindestens einen Frequenzbands ansprechend auf eines vom Empfangen einer Benutzereingabe zum Ausführen eines Frequenzscans, vom Eintreten in einen Rundfunkmodus oder vom Erfassen einer Bereichsmigration des mobilen Endgeräts ausgeführt wird.

7. Mobiles Endgerät nach einem der Ansprüche 1 bis 6, wobei die Anzeige (151) konfiguriert ist, um die Kanalliste anzuzeigen.

8. Mobiles Endgerät nach einem der Ansprüche 1 bis 7, wobei die Anzeige (151) konfiguriert ist, um einen Indikator auf der Kanalliste anzuzeigen, der die Signalstärke der Rundfunkkanäle darstellt.

9. Mobiles Endgerät nach einem der Ansprüche 1 bis 8, wobei die Benutzereingabeeinheit (130) konfiguriert ist, um eine Eingabe zum Auswählen eines Rundfunkkanals von den in der Kanalliste enthaltenen Rundfunkkanälen in einem Rundfunksignal-Ausgabemodus zu empfangen,
wobei die Steuereinrichtung (180) ein Rundfunksignal steuert, das für die Ausgabe auf dem ausgewählten Rundfunkkanal bereitgestellt wird.

10. Verfahren zum Verwalten einer Kanalliste in einem mobilen Endgerät, welches folgende Schritte aufweist:
Festlegen eines Referenzwerts entsprechend einer Benutzertätigkeit zum Festlegen des Referenzwerts,
Scannen (S510) mindestens eines Frequenzbands, wobei mindestens ein Rundfunkkanal jedem von dem mindestens einen Frequenzband zugewiesen ist,
Suchen (S520) nach mindestens einem Rundfunkkanal unter den dem mindestens einen gescannten Frequenzband zugewiesenen Rundfunkkanälen unter Verwendung eines Ergebnisses des Scannens, wobei jeder von dem mindestens einen gesuchten Rundfunkkanal eine Signalstärke aufweist, die größer oder gleich dem Referenzwert ist,
Erzeugen (S530) einer Kanalliste, welche den mindestens einen gesuchten Rundfunkkanal aufweist,
wiederholtes Scannen (S540) eines spezifischen Frequenzbands von dem mindestens einen in dem Abtastschritt (S520) gescannten Frequenzband, das von allen von dem mindestens einen Frequenzband oder -bändern, denen der mindestens eine in der Kanalliste enthaltene Rundfunkkanal zugewiesen ist, verschieden ist,
Aktualisieren (S550) der Kanalliste auf der Grundlage des Scans des spezifischen Frequenzbands in dem Scanschritt (S540) durch Hinzufügen des oder jedes von dem mindestens einen dem spezifischen Frequenzband zugewiesenen Rundfunkkanals zu der Kanalliste, falls die Signalstärke des oder jedes von dem mindestens einen dem spezifischen Frequenzband zugewiesenen Rundfunkkanals größer oder gleich dem Referenzwert ist, und
Anzeigen (S560) der Kanalliste.

11. Verfahren nach Anspruch 10, wobei das Scannen des spezifischen Frequenzbands das Scannen des spezifischen Frequenzbands, dem der mindestens eine in der Kanalliste enthaltene Rundfunkkanal zugewiesen ist, aufweist, und
das Aktualisieren der Kanalliste das Löschen eines spezifischen Rundfunkkanals von dem mindestens einen in der Kanalliste enthaltenen Rundfunkkanal aufweist, wenn die Signalstärke des spezifischen Rundfunkkanals unter den Referenzwert abfällt.

12. Verfahren nach einem der Ansprüche 10 oder 11, wobei das Scannen des spezifischen Frequenzbands das Scannen von mindestens einem von einem durch einen Benutzer ausgewählten Frequenzband und einem einem gegenwärtig lokalisierten Bereich zugewiesenen Frequenzband aufweist und das Aktualisieren der Kanalliste das Hinzufügen eines dem spezifischen Frequenzband zugewiesenen Rundfunkkanals zu der Kanalliste oder das Löschen des dem spezifischen Frequenzband zugewiesenen Rundfunkkanals aus der Kanalliste auf der Grundlage der Signalstärke des dem spezifischen Frequenzband zugewiesenen Rundfunkkanals aufweist.

13. Verfahren nach einem der Ansprüche 10 bis 12, wobei das Anzeigen der Kanalliste das Anzeigen eines Indikators auf der Kanalliste, welcher die Signalstärke der Rundfunkkanäle anzeigt, aufweist.

## Revendications

1. Terminal mobile comprenant :
une unité d'entrée d'utilisateur (130) ;
un affichage (151) ;
une unité de communication sans fil (110) configurée pour balayer au moins une bande de fréquences, au moins un canal de diffusion étant affecté à chacune de l'au moins une bande de fréquences ; et
un organe de commande (180) configuré pour :
régler une valeur de référence en fonction d'une action d'utilisateur en utilisant l'unité d'entrée d'utilisateur pour régler la valeur de référence ;
générer une liste de canaux comprenant des canaux de diffusion ayant chacun une force de signal supérieure ou égale à la valeur de référence en utilisant un résultat de balayage reçu de l'unité de communication sans fil (110) ; et
mettre à jour la liste de canaux sur la base d'un balayage répété d'une bande de fréquences spécifique de l'au moins une bande de fréquences balayée en premier par l'unité de communication sans fil (110),
dans lequel l'unité de communication sans fil (110) est en outre configurée pour :
balayer ladite bande de fréquences spécifique à part de toutes les au moins une bande de fréquences auxquelles les canaux de diffusion inclus dans la liste de canaux sont affectés, et
ajouter l'au moins un canal de diffusion ou chaque canal de diffusion affecté à la bande de fréquences spécifique à la liste de canaux si la force de signal de l'au moins un canal de diffusion ou de chaque canal de diffusion affecté à la bande de fréquences spécifique est supérieure ou égale à la valeur de référence.

2. Terminal mobile selon la revendication 1, dans lequel l'unité de communication sans fil (110) est en outre configurée pour :
balayer une bande de fréquences spécifique à laquelle les canaux de diffusion inclus dans la liste de canaux sont affectés, et dans lequel l'organe de commande (180) est en outre configuré pour :
supprimer un canal de diffusion spécifique des canaux de diffusion inclus dans la liste de canaux, la force de signal du canal de diffusion spécifique étant inférieure à la valeur de référence.

3. Terminal mobile selon l'une quelconque des revendications 1 et 2, dans lequel un canal de diffusion différent est affecté à chacune de l'au moins une bande de fréquences, l'unité de communication sans fil (110) balaye une bande de fréquences spécifique sélectionnée par un utilisateur, et l'organe de commande (180) ajoute un canal de diffusion affecté à la bande de fréquences spécifique à la liste de canaux ou supprime le canal de diffusion affecté à la bande de fréquences spécifique de la liste de canaux sur la base d'une force de signal du canal de diffusion affecté à la bande de fréquences spécifique.

4. Terminal mobile selon l'une quelconque des revendications 1 à 3, dans lequel l'unité de communication sans fil (110) balaye une bande de fréquences désignée dans une zone actuellement localisée, et l'organe de commande (180) ajoute un canal de diffusion affecté à la bande de fréquences désignée à la liste de canaux ou supprime le canal de diffusion affecté à la bande de fréquences désignée de la liste de canaux sur la base d'une force de signal du canal de diffusion affecté à la bande de fréquences désignée.

5. Terminal mobile selon l'une quelconque des revendications 1 à 4, dans lequel l'unité d'entrée d'utilisateur (130) est configurée pour recevoir une entrée d'utilisateur pour au moins l'un d'un ajout ou d'une suppression d'un canal de diffusion spécifique, dans lequel l'organe de commande (180) ajoute le canal de diffusion spécifique à la liste de canaux ou supprime le canal de diffusion spécifique de la liste de canaux en réponse à l'entrée d'utilisateur indépendamment de la force de signal du canal de diffusion spécifique.

6. Terminal mobile selon l'une quelconque des revendications 1 à 5, dans lequel le balayage de l'au moins une bande de fréquences est effectué en réponse à l'une de la réception d'une entrée d'utilisateur pour effectuer un balayage de fréquences, l'entrée dans un mode de diffusion, ou la détection d'une migration de zone du terminal mobile.

7. Terminal mobile selon l'une quelconque des revendications 1 à 6, dans lequel l'affichage (151) est configuré pour afficher la liste de canaux.

8. Terminal mobile selon l'une quelconque des revendications 1 à 7, dans lequel l'affichage (151) est configuré pour afficher un indicateur sur la liste de canaux représentant la force de signal des canaux de diffusion.

9. Terminal mobile selon l'une quelconque des revendications 1 à 8, dans lequel l'unité d'entrée d'utilisateur (130) est configurée pour recevoir une entrée pour sélectionner un canal de diffusion des canaux de diffusion inclus dans la liste de canaux dans un mode de sortie de signal de diffusion,
dans lequel l'organe de commande (180) commande à un signal de diffusion fourni sur le canal de diffusion sélectionné d'être délivré.

10. Procédé de gestion d'une liste de canaux dans un terminal mobile, le procédé comprenant :
le réglage d'une valeur de référence en fonction d'une action d'utilisateur pour régler la valeur de référence ;
le balayage (S510) d'au moins une bande de fréquences, au moins un canal de diffusion étant affecté à chacune de l'au moins une bande de fréquences ;
la recherche (S520) d'au moins un canal de diffusion parmi les canaux de diffusion affectés à l'au moins une bande de fréquences balayée en utilisant un résultat du balayage, chacun de l'au moins un canal de diffusion recherché ayant une force de signal supérieure ou égale à la valeur de référence ;
la génération (S530) d'une liste de canaux comprenant l'au moins un canal de diffusion recherché ;
le balayage à répétition (S540) d'une bande de fréquences spécifique de l'au moins une bande de fréquences balayée à l'étape de balayage (S520) à part de toute les au moins une bande de fréquences auxquelles l'au moins un canal de diffusion inclus dans la liste de canaux est affecté ;
la mise à jour (S550) de la liste de canaux sur la base du balayage de la bande de fréquences spécifique à l'étape de balayage (S540), en ajoutant l'au moins un canal de diffusion ou chaque canal de diffusion affecté à la bande de fréquences spécifique à la liste de canaux si la force de signal de l'au moins un canal de diffusion ou de chaque canal de diffusion affecté à la bande de fréquences spécifique est supérieure ou égale à la valeur de référence ; et
l'affichage (S560) de la liste de canaux.

11. Procédé selon la revendication 10, dans lequel le balayage de la bande de fréquences spécifique comprend le balayage de la bande de fréquences spécifique à laquelle l'au moins un canal de diffusion inclus dans la liste de canaux est affecté ; et la mise à jour de la liste de canaux comprend la suppression d'un canal de diffusion spécifique de l'au moins un canal de diffusion inclus dans la liste de canaux, la force de signal du canal de diffusion spécifique étant inférieure à la valeur de référence.

12. Procédé selon l'une quelconque des revendications 10 et 11, dans lequel le balayage de la bande de fréquences spécifique comprend le balayage d'au moins l'une d'une bande de fréquences sélectionnée par un utilisateur et d'une bande de fréquences désignée dans une zone actuellement localisée, et la mise à jour de la liste de canaux comprend l'ajout d'un canal de diffusion affecté à la bande de fréquences spécifique à la liste de canaux ou la suppression du canal de diffusion affecté à la bande de fréquences spécifique de la liste de canaux sur la base d'une force de signal du canal de diffusion affecté à la bande de fréquences spécifique.

13. Procédé selon l'une quelconque des revendications 10 à 12, dans lequel l'affichage de la liste de canaux comprend l'affichage d'un indicateur sur la liste de canaux représentant la force de signal des canaux de diffusion.
